# EUROPEAN PATENT APPLICATION

(11) **EP 4 582 922 A1**
(43) Date of publication of application: **09.07.2025**
(21) Application number: 23877576.1
(22) Date of filing: 27.09.2023
(51) Int. Cl.: G06F 3/04842, G06F 3/04883, G06F 3/04817, G06F 3/041, G06F 3/0486, H04M 1/72469, H04M 1/72454

(54) **FOLDABLE ELECTRONIC DEVICE, AND METHOD FOR PROCESSING USER INPUT BY FOLDABLE ELECTRONIC DEVICE**

(30) Priority: 12.10.2022 KR 20220130718
(71) Applicant: Samsung Electronics Co., Ltd., Suwon-si, Gyeonggi-do 16677 (KR)
(72) Inventor: JUNG, Inhyung, Suwon-si, Gyeonggi-do 16677 (KR); KIM, Sangheon, Suwon-si, Gyeonggi-do 16677 (KR); LIM, Yeunwook, Suwon-si, Gyeonggi-do 16677 (KR)
(74) Representative: Appleyard Lees IP LLP
(86) International application number: PCT/KR2023/015002
(87) International publication number: WO 2024/080648

(57) **Abstract**

One embodiment of the present invention can provide a method and device configured to: use at least one sensor module (176) to detect the folding angle between a first housing (210) and a second housing (220), which are disposed on the respective sides of a hinge structure and fold with respect to each other; display a user interface on a first display (230) on the basis of the folding angle; determine whether a user input passing through the hinge structure (260) is detected through the first display while displaying the user interface at the folding angle; and perform a function corresponding to the user input.

## Description

### [Technical Field]

An embodiment of the disclosure discloses a foldable electronic device and a method for processing a user input by a foldable electronic device.

### [Background Art]

With the development of digital technology, various types of electronic devices, such as a mobile communication terminal, a personal digital assistant (PDA), an electronic note, a smartphone, a tablet personal computer (PC), or a wearable device, have been widely used. Electronic devices have a limited size for portability, thereby limiting the size of the displays of the electronic devices. Therefore, in recent years, various types of electronic devices for providing extended screens in the electronic devices by using multiple displays have been developed.

For example, multiple displays are provided to provide an extended screen by multiple displays. In another example, an electronic device is designed to provide a variety of services to a user on a large screen, with the size of the screen progressively increasing in a display having a limited size. The electronic device may have a novel form factor, such as a multi-display (e.g., dual display) device (e.g., a foldable device, a rollable device, or a slidable device). A foldable device may have a display (e.g., a foldable display or a flexible display) that folds (or bends) and can be folded for use or unfolded for use. A rollable or slidable device may have a flexible display, and may be used by rolling the flexible display into the back of the rollable device for storage, or by extending the flexible display from the front of the rollable device for use.

### [Disclosure of Invention]

### [Technical Problem]

A foldable electronic device configured to be folded with respect to each other along a folding axis may include a first housing and a second housing formed along the folding axis to be foldable, a main display formed in a first direction in an unfolded state (e.g., an open state), and a sub-display formed in a second direction opposite the first direction in the unfolded state. In an intermediate state (a flex mode) where the first housing and the second housing of the foldable electronic device form a folding angle (e.g., flex mode), the foldable electronic device may display a user interface via the main display.

An embodiment may provide a method and a device for improving errors that occur with respect to a user input passing through a hinge structure formed between the first housing and the second housing of the foldable electronic device in the flex mode in which the first housing and the second housing form a folding angle.

### [Solution to Problem]

A foldable electronic device 101 according to an embodiment of the disclosure includes a hinge structure 260, a first housing 210 and a second housing 220 disposed on both sides of the hinge structure and configured to be folded with respect to each other, a first display 230 disposed facing a first direction of the first housing and the second housing, at least one sensor module 176, a memory 130, and a processor 120 operatively connected to the first display, the at least one sensor module, or the memory, wherein the processor may be configured to detect a folding angle between the first housing and the second housing by using the at least one sensor module 176, display a user interface on the first display 230 based on the folding angle, determine whether a user input passing through the hinge structure 260 is detected on the first display while the user interface is displayed at the folding angle, and perform a function corresponding to the user input.

A method for operating a foldable electronic device 101 including a first housing 210 and a second housing 220 disposed on both sides of a hinge structure 260 and configured to be folded with respect to each other, according to an embodiment of the disclosure, may include: detecting a folding angle between the first housing and the second housing by using at least one sensor module 176 included in the foldable electronic device 101; displaying a user interface on the first display 230 based on the folding angle; determining whether a user input passing through the hinge structure 260 is detected on the first display while the user interface is displayed at the folding angle; and performing a function corresponding to the user input.

### [Advantageous Effects of Invention]

According to an embodiment, it is possible to seamlessly perform a user input moving from the first housing to the second housing or from the second housing to the first housing in a flex mode in which the first housing and second housing of the foldable electronic device forms a folding angle.

According to an embodiment, even when a touch (or pen touch) is released during a drag-and-drop input passing through the hinge structure formed between the first housing and the second housing in a flex mode of the foldable electronic device, processing following the release of the touch may be delayed to process the input as a single user input, thereby improving the user experience.

According to an embodiment, when a touch is temporarily released in the hinge structure due to the small folding angle between the first housing and the second housing, the touch event may be converted to and recognized as a hover event so that the touch event can be processed according to a user's intention.

According to an embodiment, in a margin region adjacent to the hinge structure, an area that can be touched by a user varies depending on a folding angle. Thus, a user input may be efficiently processed by varying the margin region depending on the folding angle.

According to an embodiment, it is possible to solve the problem of finger disengagement due to bending and/or distortion of a hinge when, in a flex mode, selecting an icon contained in a taskbar and moving the icon toward an upper housing.

### [Brief Description of Drawings]

FIG. 1 is a block diagram of an electronic device in a network environment according to an embodiment.
FIG. 2A illustrates the unfolded state of a foldable electronic device according to an embodiment.
FIG. 2B illustrates the folded state of a foldable electronic device according to an embodiment.
FIG. 2C illustrates the intermediate state of a foldable electronic device according to an embodiment.
FIG. 3 is a flowchart illustrating a method for operating a foldable electronic device according to an embodiment.
FIG. 4 illustrates an example of executing multiple windows in a flex mode of a foldable electronic device according to an embodiment.
FIG. 5 illustrates an example of moving an icon in a flex mode of a foldable electronic device according to an embodiment.
FIG. 6 illustrates an example of executing multiple windows based on a pen touch in a flex mode of a foldable electronic device according to an embodiment.
FIG. 7 is a flowchart illustrating a method for executing multiple windows in a flex mode of a foldable electronic device according to an embodiment.
FIG. 8 illustrates an example of a drop target region of a foldable electronic device according to an embodiment.
FIG. 9 is a flowchart illustrating a method for moving an icon in a flex mode of a foldable electronic device according to an embodiment.

### [Mode for the Invention]

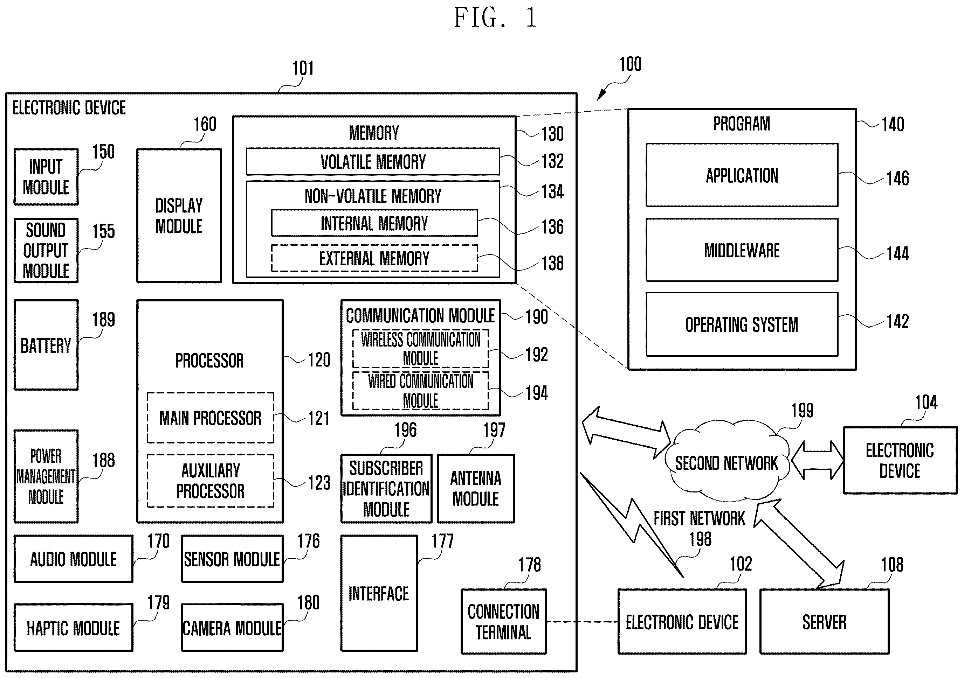

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

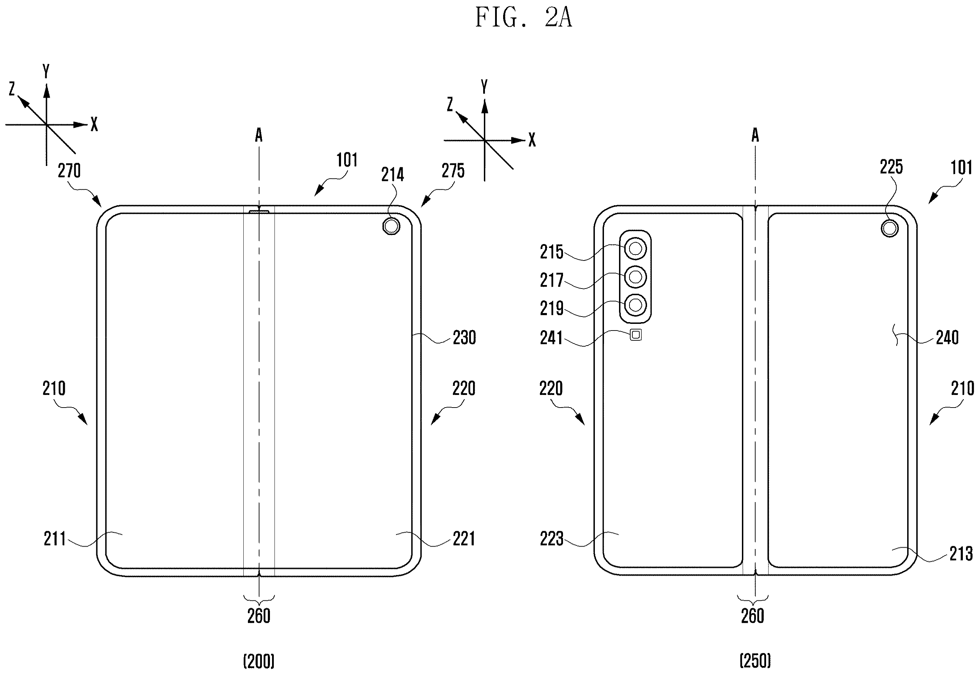

FIG. 2A illustrates the unfolded state of a foldable electronic device according to an embodiment.

Referring to FIG. 2A, a foldable electronic device (e.g., the electronic device 101 in FIG. 1) according to an embodiment may include a first housing 210 including a first surface 211 and a third surface 213, and a second housing 220 including a second surface 221 and a fourth surface 223. The first surface 211 of the first housing 210 and the second surface 221 of the second housing 220 may represent a front surface 200 of the foldable electronic device 101, and the third surface 213 of the first housing 210 and the fourth surface 223 of the second housing 220 may represent a rear surface 250 of the foldable electronic device 101.

The first housing 210 and the second housing 220 may be disposed on either side about a folding axis (e.g., the axis A) and may have overall symmetrical shapes with respect to the folding axis. For example, on the front surface 200 of the foldable electronic device 101, the first housing 210 may be on the left side of the foldable electronic device 101 with respect to the folding axis, and the second housing 220 may be on the right side of the foldable electronic device 101. The first housing 210 and the second housing 220 may be designed to be folded with respect to each other. A hinge structure 260 may be disposed between the first housing 210 and the second housing 220, so that the front surface 200 of the foldable electronic device 101 may be folded. **In** the hinge structure 260, a third sensor module for detecting an angle change between the first housing 210 and the second housing 220 may be disposed. The third sensor module may include at least one of an acceleration sensor, a gyroscope sensor, a geomagnetic sensor, a proximity sensor, a gesture sensor, or a Hall sensor.

The angle or distance between the first housing 210 and the second housing 220 may vary depending on whether the state of the foldable electronic device 101 is an unfolded (or opened) state, a folded (or closed) state, or an intermediate state. For example, the unfolded state (or unfolding state) may refer to an opened state, an open state, or a flat (or planar) state. The unfolded state may refer to a state in which the foldable electronic device 101 is fully unfolded, with the first housing 210 and the second housing 220 disposed side by side. The unfolded state may imply that the angle between the first housing 210 and the second housing 220 is 180 degrees, and the first surface 211 of the first housing 210 and the second surface 221 of the second housing 220 are arranged to face the same direction (e.g., a first direction). FIG. 2A illustrates the front surface 200 of the foldable electronic device 101 and the rear surface 250 of the foldable electronic device 101 while the foldable electronic device 101 is unfolded.

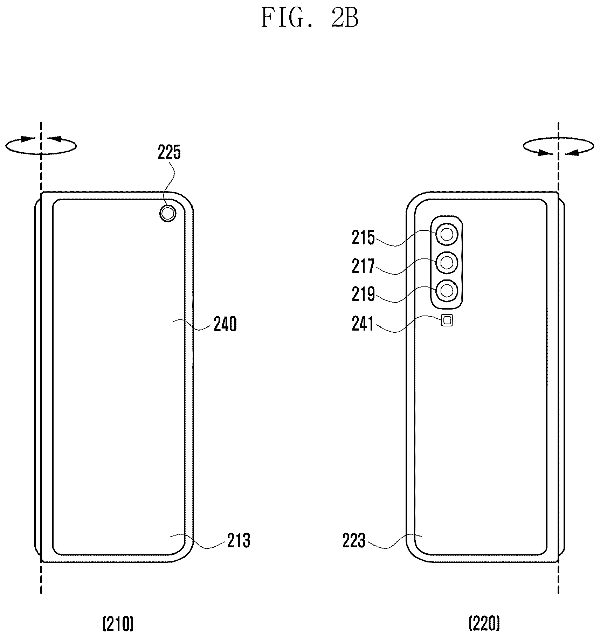

The folded state (folding state) may refer to a folded state, a closed state, or a close state (e.g., FIG. 2B). The folded state may refer to a state in which the foldable electronic device 101 is fully folded, with the first housing 210 and the second housing 220 disposed facing each other. In the folded state, the angle between the first housing 210 and the second housing 220 forms a narrow angle (e.g., 0 to 5 degrees), and the first surface 211 of the first housing 210 and the second surface 221 of the second housing 220 may face each other. Hereinafter, although the foldable electronic device 101 of a folding type implemented as an in-folding type is described, the same or similar description may be applied to the foldable electronic device 101 implemented as an out-folding type.

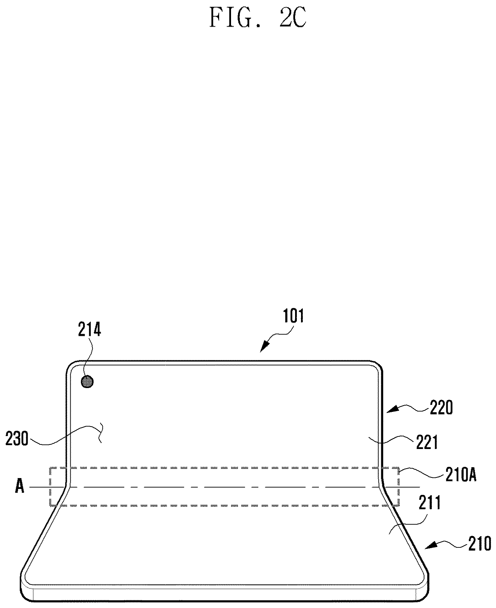

The intermediate state is a state in which the first housing 210 and the second housing 220 are disposed with a certain angle therebetween, such that the foldable electronic device 101 is neither in the unfolded state nor in the folded state (e.g., FIG. 2C). The intermediate state may refer to a state in which the first surface 211 of the first housing 210 and the second surface 221 of the second housing 220 form a predetermined angle (e.g., 6 to 179 degrees).

The foldable electronic device 101 may have a first display 230 (e.g., a main display) (e.g., the display module 160 in FIG. 1) formed on the first surface 211 and the second surface 221 that are the front surface 200 of the electronic device. The first display 230 may be formed entirely on the front surface 200 (e.g., a first direction of the foldable electronic device 101). The first display 230 may refer to a flexible display having at least a partial region that can be deformed into a flat or curved surface. The first display 230 may be folded to the left and to the right about the folding axis (e.g., the axis A). The first display 230 may include a first display region corresponding to the first surface 211 or a second display region corresponding to the second surface 221. Furthermore, the foldable electronic device 101 may include a first camera 214 disposed on the second surface 221. Although the drawing illustrates one first camera 214, multiple first cameras 214 may be arranged. Although the drawing shows the first camera 214 being disposed on the second surface 221, the first camera 214 may be disposed on the first surface 211.

In addition, the foldable electronic device 101 may have a second display 240 (e.g., a sub-display or a cover display) (e.g., the display module 160 in FIG. 1) disposed on a portion of the rear surface 250 of the electronic device. The second display 240 may be formed on at least a portion of the third surface 213 of the foldable electronic device 101. The foldable electronic device 101 may include multiple cameras (e.g., 215, 217, 219, and 225) on the rear surface 250 of the electronic device 101. For example, the foldable electronic device 101, may include a second camera 215, a third camera 217, a fourth camera 219 disposed on the fourth surface 223, and a fifth camera 225 disposed on the third surface 225. According to various embodiments, the second camera 215, third camera 217, fourth camera 219, and fifth camera 225 may have the same or different performance (e.g., field of view or resolution). For example, the second camera 215 may have a field of view greater than 125 degrees (e.g., ultra-wide), the third camera 217 may have a field of view between 90 degrees and 125 degrees (e.g., wide), the fourth camera 219 may have a field of view of 90 degrees and a 2x zoom (e.g., tele), and the fifth camera 225 may have a field of view of 90 degrees and a normal magnification. The foldable electronic device 101 may further include a sensor region 241 on the fourth surface 223. In the sensor region 241, an infrared sensor, a fingerprint sensor, or an illuminance sensor, similar to the sensor module 176 in FIG. 1, may be disposed.

According to various embodiments, when the foldable electronic device 101 is in an unfolded state (e.g., FIG. 2A), the first display 230 may be turned on (or activated) and the second display 240 may be turned off (or deactivated). When a user input (e.g., touch or button selection) is not detected for a certain amount of time (e.g., 5 seconds, 10 seconds, or 1 minute) while the first display 230 is turned on, the foldable electronic device 101 may turn off the first display 230. Alternatively, when a user input (e.g., touch or button selection) is detected on the second display 240 while the second display 240 is turned off, the foldable electronic device 101 may turn on the second display 240. According to various embodiments, when the second display 240 is turned on, the first display 230 may be turned off. Alternatively, even when the second display 240 is turned on, the foldable electronic device 101 may keep the first display 230 in a turned-on state for a predetermined time, and then turn the first display 230 off when no user input is detected on the first display 230 after a predetermined time has elapsed.

The foldable electronic device 101 may further include a sensor module (e.g., the sensor module 176 in FIG. 1). For example, the foldable electronic device 101 may include a first sensor module in the first housing 210 and a second sensor module in the second housing 220. The first sensor module or the second sensor module may include at least one of an acceleration sensor, a gyroscope sensor, a geomagnetic sensor, a proximity sensor, a gesture sensor, or a Hall sensor. An acceleration sensor is a sensor that detects velocity, and a gyroscope sensor may detect angular velocity, which is the rate of rotation of an object. A geomagnetic sensor is a sensor that detects geomagnetism, and may detect the direction (e.g., azimuth) of the geomagnetism, such as east, west, south, or north, like a compass. A proximity sensor may detect whether an object is nearby, and a gesture sensor may detect infrared light. A Hall sensor may detect changes in electrical signals based on the proximity or distance of a magnetized object. The hall sensor may detect a change in state of the foldable electronic device 101 in an analog or digital manner.

The foldable electronic device 101 may use at least one sensor module (e.g., the first sensor module, the second sensor module, or the third sensor module) to detect a state (e.g., an unfolded state, a folded state, or an intermediate state) of the foldable electronic device 101. Based on when the foldable electronic device 101 is placed as in the front surface 200, the x-axis of the first sensor module or the second sensor module may indicate a left/right direction, the y-axis may indicate a front/back direction, and the z-axis may indicate a height direction. When the foldable electronic device 101 is placed as in the front surface 200, sensing data (or sensing values or sensing angles) of the x-axis, y-axis, and z-axis measured (or acquired) by the first sensor module or the second sensor module may be the same or similar. For example, since the x-axis and y-axis of an inertial sensor are not affected by the direction of gravity, while the z-axis is affected by the direction of gravity, the z-axis sensing data may be different when the foldable electronic device 101 is placed with the front surface 200 and when the foldable electronic device 101 is placed with the rear surface 250.

FIG. 2B illustrates the folded state of a foldable electronic device according to an embodiment.

Referring to FIG. 2B, the foldable electronic device 101 may have the hinge structure 260 disposed about a folding axis (e.g., axis A) such that the front surface 200 of the foldable electronic device 101 is in a folded state (e.g., a closed state). FIG. 2B illustrates the third surface 213 of the first housing 210 and the fourth surface 223 of the second housing 220 while the foldable electronic device 101 is folded.

According to various embodiments, when the foldable electronic device 101 is in the folding state, the first display 230 may be turned off and the second display 240 may be turned on. When no user input is detected for a predetermined time while the second display 240 is turned on, the foldable electronic device 101 may turn off the second display 240. When the foldable electronic device 101 is in a folded state and the second display 240 is turned off, the foldable electronic device 101 may turn on the second display 240 if a button formed on (or mounted to) the foldable electronic device 101 is selected. Alternatively, when the foldable electronic device 101 is in a folded state, the second display 240 is off, and a user input is detected on the second display 240, the foldable electronic device 101 may turn on the second display 240.

According to various embodiments, z-axis sensing data measured (or acquired) by the first sensor module and the second sensor module may be different when the foldable electronic device 101 is in a folded state. For example, when the third surface 213 of the first housing 210 is placed to face a first direction (e.g., a direction opposite to the direction of gravity) (e.g., when the fourth surface 223 of the second housing 220 is placed to face a second direction (e.g., the direction of gravity), x-axis and y-axis sensing data measured by the first sensor module may be 0° and z-axis sensing data may be -90°, and x-axis and y-axis sensing data measured by the second sensor module may be 0° and z-axis sensing data may be 90°. The first direction and the second direction may be opposite each other. Furthermore, when the fourth surface 223 of the second housing 220 is placed to face the first direction (e.g., when the third surface 213 of the first housing 210 is placed to face the second direction), x-axis and y-axis sensing data measured by the first sensor module may be 0° and z-axis sensing data may be 90°, and x-axis and y-axis sensing data measured by the second sensor module may be 0° and z-axis sensing data may be -90°.

FIG. 2C illustrates the intermediate state of a foldable electronic device according to an embodiment.

Referring to FIG. 2C, the foldable electronic device 101 may have the hinge structure 260 disposed about a folding axis (e.g., the axis A) and may be in an intermediate state where the first housing 210 and the second housing 220 form a predetermined angle. The drawing illustrates a state in which the third surface 213 of the first housing 210 rests on the floor and the first surface 211 of the first housing 210 and the second surface 221 of the second housing 220 form a predetermined angle. For example, in the intermediate state, one surface of the first housing 210 or the second housing 220 may rest on the floor, and the first housing 210 resting on the floor and the second housing 220 not resting on the floor may form the predetermined angle. The direction in which the third surface 213 of the first housing 210 rests on the floor may be the transverse direction of the foldable electronic device 101. In the intermediate state, the side surfaces of the first housing 210 and the second housing 220 may rest on the floor. The direction in which the side surfaces of the first housing 210 and the second housing 220 rest on the floor may be the longitudinal direction of the foldable electronic device 101. Alternatively, the first housing 210 and the second housing 220 may form a predetermined angle while a user holds the foldable electronic device 101 in the transverse or longitudinal direction.

According to an embodiment, in the intermediate state, the first display 230 may be activated, and a user interface may be displayed on the first display 230. The user interface may be displayed over the entire screen of the first display 230, or may be divided into two parts (or regions), such as a spilt screen. Alternatively, in the intermediate state, an input unit (e.g., a keypad) may be displayed on the first surface 211 of the first housing 210 and an output unit (e.g., an application execution screen) may be displayed on the second surface 221 of the second housing 220.

According to an embodiment, the foldable electronic device 101 may configure a hinge region 210A adjacent to the hinge structure 260 disposed between the first housing 210 and the second housing 220. The foldable electronic device 101 may adjust the margin region of the hinge region 210A according to the folding angle. When the folding angle is small (e.g., less than 90 degrees), the foldable electronic device 101 may configure the margin region of the hinge region 210A to be large because the area of the hinge region 210A which the user can touch is small. When the folding angle is large (e.g., equal to greater than 120 degrees), the foldable electronic device 101 may configure the margin region to be small because there is a certain area of the hinge region which the user can touch.

The foldable electronic device 101 according to an embodiment of the disclosure may include a hinge structure 260, a first housing 210 and a second housing 220 disposed on both sides of the hinge structure and configured to be folded with respect to each other, a first display 230 disposed to face a first direction of the first housing and the second housing, at least one sensor module 176, a memory 130, and a processor 120 operatively connected to the first display, the at least one sensor module, or the memory, wherein the processor may be configured to detect a folding angle between the first housing and the second housing by using the at least one sensor module 176, display a user interface on the first display 230 based on the folding angle, determine whether a user input passing through the hinge structure 260 is detected on the first display while the user interface is displayed at the folding angle, and perform a function corresponding to the user input.

The processor may be configured to detect, while an execution screen of a first application is displayed on the first display 230 in a flex mode in which the first housing 210 and the second housing 220 form a folding angle, a user input for selecting an icon of a second application included in a task bar displayed on the first display 230 corresponding to the first housing 210.

The processor may be configured to execute multiple windows when the detected user input is dragged and dropped onto the first display 230 corresponding to the second housing 220 after passing through the hinge structure 260.

The processor may be configured to display a drop target region in response to a touch trajectory of the user input before the execution of the multiple windows.

The processor may be configured to display the execution screen of the first application on the first display 230 corresponding to the first housing 210, and to display an execution screen of the second application on the first display 230 corresponding to the second housing 220.

The processor may be configured to detect, while a home screen is displayed on the first display 230 in a flex mode in which the first housing 210 and the second housing 220 form a folding angle, a user input for selecting an icon of at least one application displayed on the first display 230 corresponding to the first housing 210.

The processor may be configured to move the icon of the at least one application, for which the user input has been detected, when the detected user input is dragged and dropped onto the first display 230 corresponding to the second housing 220 after passing through the hinge structure 260.

The processor may be configured to, while a home screen is displayed on the first display 230 in a flex mode in which the first housing 210 and the second housing 220 form a folding angle, detect a user input for selecting at least one widget displayed on the first display 230 corresponding to the first housing 210, and move the at least one widget, for which the user input has been detected, when the detected user input is dragged and dropped onto the first display 230 corresponding to the second housing 220 after passing through the hinge structure 260.

The processor may be configured to, while an execution screen of a first application and an execution screen of a second application are displayed on the first display 230 in a flex mode in which the first housing 210 and the second housing 220 form a folding angle, move data for which a user input is detected to the execution screen of the first application when the user input starts from at least one piece of data included in the execution screen of the second application.

The processor may be configured to change a touch event to a hover event when touch release occurs while the user input passes through the hinge structure 260.

The processor may be configured to delay performing a function corresponding to the touch release when the touch release occurs while the user input passes through the hinge structure 260.

The processor may be configured to process the user input detected before and after the touch release as a single user input, when a touch occurs on the first display corresponding to another housing adjacent to the hinge structure within a designated time after the touch release.

The processor may be configured to adjust a margin region of a hinge region 210A based on the folding angle between the first housing 210 and the second housing 220.

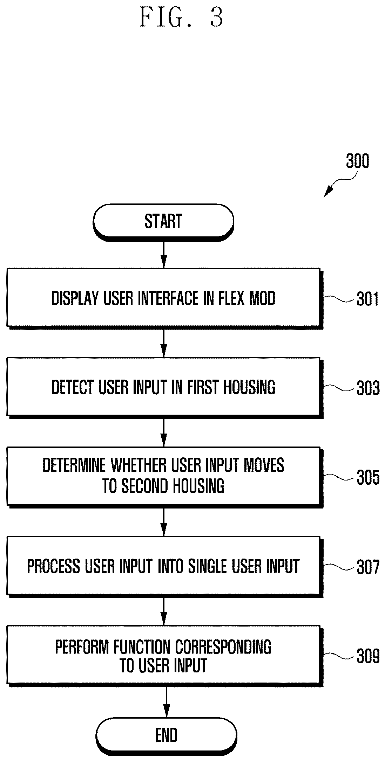

FIG. 3 is a flowchart 300 illustrating a method for operating a foldable electronic device according to an embodiment.

Referring to FIG. 3, in operation 301, a processor (e.g., the processor 120 in FIG. 1) of a foldable electronic device (e.g., the electronic device 101 in FIG. 1) according to an embodiment may display a user interface in a flex mode. The foldable electronic device 101 may include a first housing (e.g., the first housing 210 in FIGS. 2A to 2C), which includes a first surface (e.g., the first surface 211 in FIGS. 2A to 2C) and a third surface (e.g., the third surface 213 in FIGS. 2A to 2C), and a second housing (e.g., the second housing 220 in FIGS. 2A to 2C), which includes a second surface (e.g., the second surface 221 in FIGS. 2A to 2C) and a fourth surface (e.g., the fourth surface 223 in FIGS. 2A to 2C). The first housing 210 and the second housing 220 may be disposed on both sides of a hinge structure (e.g., the hinge structure 260 in FIG. 2A), and may have overall symmetrical shapes with respect to a folding axis (e.g., A).

The foldable electronic device 101 may have a first display 230 (e.g., a main display) (e.g., the display module 160 in FIG. 1) formed on the first surface 211 of the first housing 210 and the second surface 221 of the second housing 220. The first display 230 may be formed entirely on the front surface 200 of the foldable electronic device 101 (e.g., in a first direction of the electronic device 101). The first display 230 may refer to a flexible display having at least a partial region that can be deformed into a flat or curved surface. The foldable electronic device 101 may have a second display 240 (e.g., a sub-display or a cover display) (e.g., the display module 160 in FIG. 1) formed on a portion of the rear surface 250 of the foldable electronic device. The second display 240 may be formed on at least a portion of the third surface 213 of the first housing 210.

The flex mode may refer to a state of the foldable electronic device 101 in which the first housing 210 and the second housing 220 form a folding angle (e.g., FIG. 2C). For example, the flex mode may imply that one surface of the first housing 210 or the second housing 220 rests on a floor, and the first housing 210 resting on the floor and the second housing 220 not resting on the floor form a predetermined angle. The direction in which one surface of the first housing 210 or one surface of the second housing 220 rests on the floor is the transverse direction of the foldable electronic device 101. In the flex mode, the side surfaces of the first housing 210 and the second housing 220 may rest on the floor. The direction in which the side surfaces of the first housing 210 and the second housing 220 rest on the floor may be the longitudinal direction of the foldable electronic device 101.

Hereinafter, the flex mode will be described as a state in which a user can use the first display 230 while one surface (e.g., the third surface 213) of the first housing 210 rests on the floor. However, the disclosure is not limited by the description. In operation 301, the processor 120 may display the user interface on the first display 230 in the flex mode. The user interface may be an execution screen of at least one application or a home screen. The home screen may also correspond to the execution screen of an application.

In operation 303, the processor 120 may detect a user input in the first housing 210. For example, the processor 120 may detect the user input on the first display 230 corresponding to the first housing 210. The user input may include a touch input where a part (e.g., a hand or a finger) of the user's body contacts the first display 230, or a touch input using a pen. The foldable electronic device 101 may include a digitizer layer capable of detecting a touch input using a pen. For example, the foldable electronic device 101 may include a first digitizer layer, which corresponds to the first surface 211 of the first housing 210, and a second digitizer layer, which corresponds to the second surface 221 of the second housing 220.

Hereinafter, a case may be described in which, while the third surface 213 of the first housing 210 rests on the floor (e.g., in the transverse direction), a user input starts from below the first display 230 (e.g., the first housing 210), and is dragged and dropped onto the first display 230 (e.g., the second housing 220) via the hinge structure 260. However, the disclosure is not limited by the description.

The user input may start on the first display 230 and is dragged and dropped in the downward direction of the first display 230. According to an embodiment, while the third surface 213 of the first housing 210 rests on the floor, a user input may start on the first display 230 (e.g., the second housing 220) and is dragged and dropped below the first display 230 (e.g., the first housing 210) via the hinge structure 260.

According to an embodiment, the user input may include a user input which, while the fourth surface 224 of the second housing 220 rests on the floor (e.g., in the transverse direction), starts from below the first display 230 (e.g., from the second housing 220) and is dragged and dropped onto the first display 230 (e.g., to the first housing 210) via the hinge structure 260. The user input may include a user input, which, while the fourth surface 224 of the second housing 220 rests on the floor (e.g., in the transverse direction), starts on the first display 230 (e.g., from the first housing 210), and is dragged and dropped below the first display 230 (e.g., to the second housing 220) via the hinge structure 260.

Alternatively, when the foldable electronic device 101 is placed in the longitudinal direction in a flex mode, the user input may stat from the left of the first display 230 and be dragged and dropped to the right of the first display 230 via the hinge structure 260. Alternatively, when the foldable electronic device 101 is placed in the longitudinal direction in the flex mode, the user input may start from the right of the first display 230 and be dragged and dropped to the left of the first display 230 via the hinge structure 260.

In operation 305, the processor 120 may determine whether the user input is a user input moving to the second housing 220. The processor 120 may determine whether the user input starts from the first display 230 corresponding to the first housing 210 and is dragged and dropped onto the first display 230 corresponding to the second housing 220 via the hinge structure 260. For a user input that does not move between the housings when the foldable electronic device 101 is in a flex mode, the processor 120 may perform a function corresponding to the user input. When the foldable electronic device 101 is in a flex mode, in the case of a user input that moves between the housings, touch release may occur in the hinge structure 260. The flex mode may be a state in which a folding angle is formed between the first housing 210 and the second housing 220. As the folding angle becomes smaller, the likelihood that the touch will be released when passing through the hinge structure 260 may increase. When the touch is released, a function corresponding to the user input according to the touch release may be performed, and thus another function unrelated to the user's intent may also be performed.

In operation 307, the processor 120 may process the user input as a single user input. In the case in which a user input starting from the first housing 210 in the flex mode moves to the second housing 220, even when a touch is temporarily released in a hinge region (e.g., the hinge region 210A in FIG. 2C) adjacent to the hinge structure 260, the processor 120 may change the touch event to a hover event. Alternatively, the processor 120 may delay (or postpone) performing a function corresponding to the touch release. Even when the touch release is detected at the hinge region 210A, the processor 120 may process a user input dragged and dropped from the first housing 210 of the first display 230 to the second housing 220 as a single user input when a touch is detected at the second housing 220 within a designated time (e.g., 0.1 seconds, 0.3 seconds, 0.5 seconds).

In operation 309, the processor 120 may perform a function corresponding to the user input. For example, if the user interface displayed in operation 301 is an execution screen of a first application, and when a user input (e.g., a long press) starts from an icon of a second application included in a taskbar on the execution screen of the first application, the processor 120 may execute multiple windows (e.g., a split screen view or a pop-up view) to display the execution screen of the first application and an execution screen of the second application. When at least one application is executed in the flex mode, the processor 120 may display a taskbar, including icons corresponding to one or more applications, at the bottom of the first display 230. The task bar may be provided to quickly execute another application while the at least one application is executed.

The processor 120 may display the execution screen of the second application at a location at which a user input is released on the first display 230 corresponding to the second housing 220 during execution of multiple windows. According to an embodiment, the processor 120 may display a drop target region in response to the touch trajectory of the user input before the execution of the multiple windows. The drop target region may represent a region in which the multi windows can be executed, and may include three or more regions. The processor 120 may display the boundaries of the drop target region, or distinguishably display regions to be displayed as multiple windows in response to a user input.

According to an embodiment, when the user interface displayed in operation 301 is a home screen, and when a user input (e.g., a long press) starts from an icon of at least one application included in the home screen, the processor 120 may move the icon (e.g., a selected icon) of the application for which the user input is detected on the first display 230 corresponding to the first housing 210. The processor 120 may move the selected icon to a location on the first display 230 corresponding to the second housing 220 where the user input is released. When the user interface displayed in operation 301 is a home screen, and when a user input (e.g., a long press) starts from at least one widget (or widget information) included in the home screen, the processor 120 may move the widget (e.g., the selected widget) for which the user input is detected on the first display 230 corresponding to the first housing 210.

According to an embodiment, when the user interface displayed in operation 301 is an execution screen of a first application and an execution screen of a second application, and when a user input starts from at least one piece of data (or file) included in the execution screen of the second application, the processor 120 may move, to the execution screen of the first application, the data (e.g., the selected data) for which the user input is detected. The user may attach a photo or a document as an attachment while the first application, such as an email or a messenger, is executed. The processor 120 may add the selected data as an attachment when the user input is released from the attachment region included in the execution screen of the first application.

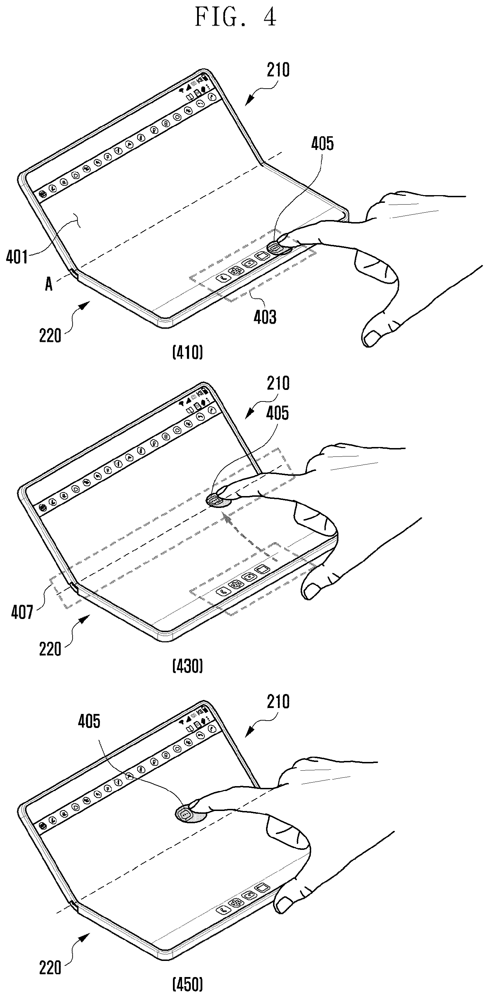

FIG. 4 illustrates an example of executing multiple windows in a flex mode of a foldable electronic device according to an embodiment.

Referring to FIG. 4, a foldable electronic device (e.g., the electronic device 101 in FIG. 1) according to an embodiment includes a first housing (e.g., the first housing 210 in FIGS. 2A to 2C) including a first surface (e.g., the first surface 211 in FIGS. 2A to 2C) and a third surface (e.g., the third surface 213 in FIGS. 2A to 2C), and a second housing (e.g., the second housing 220 in FIGS. 2A to 2C) including a second surface (e.g., the second surface 221 in FIGS. 2A to 2C) and a fourth surface (e.g., the fourth surface 223 in FIGS. 2A to 2C). The first housing 210 and the second housing 220 may be disposed on both sides of a hinge structure (e.g., the hinge structure 260 in FIG. 2A), and may have overall symmetrical shapes with respect to a folding axis (e.g., A).

The foldable electronic device 101 may have a first display 230 (e.g., a main display) (e.g., the display module 160 in FIG. 1) formed on the first surface 211 of the first housing 210 and the second surface 221 of the second housing 220. The first display 230 may be formed entirely on the front surface 200 of the foldable electronic device 101 (e.g., in a first direction of the electronic device 101). The first display 230 may refer to a flexible display having at least a partial region that can be deformed into a flat or curved surface.

A processor 101 (e.g., the processor 120 in FIG. 1) of the foldable electronic device 101 may display an execution screen 401 of a first application on the first display 230 in a flex mode. The flex mode may refer to a state of the foldable electronic device 101 in which the first housing 210 and the second housing 220 form a folding angle (e.g., FIG. 2C). For example, in the flex mode, one surface of the second housing 220 may rest on a floor, and the second housing 220 resting on the floor and the first housing 210 not resting on the floor may form a predetermined angle.

When at least one application is executed in the flex mode, the processor 120 may display a task bar 403, which includes an icon corresponding to the at least one application, at the bottom of the first display 230. The task bar 403 may be provided to quickly execute another application while the at least one application is executed.

Referring to a first drawing numeral 410, the processor 120 may detect a user input 405 that selects an icon of a second application included in the taskbar 403 while the execution screen 401 of the first application is displayed in the flex mode. In the drawing, the user input 405 may be illustrated as, for example, a finger touch by a user.

A second drawing numeral 430 illustrates an example where the user input 405 selecting the icon of the second application moves and passes through a hinge region 407 (e.g., the hinge region 210A in FIG. 2C). The hinge region 407 may be a region adjacent to the hinge structure 260. The processor 120 may determine whether the user input 405 passing through the hinge region 407 moves to the first display 230 corresponding to the first housing 210.

According to an embodiment, when the user input 405 passes through the hinge region 407, touch release may temporarily occur. The processor 120 may determine whether the user input 405, selecting the icon of the second application, passes through the hinge region 407 and moves to a location on the first display 230 corresponding to the first housing 210, and may process the touch release occurring at the hinge region 407. For example, even when touch release occurs in the hinge region 407, the processor 120 may change a touch event to a hover event. Alternatively, the processor 120 may delay performing a function corresponding to the touch release. When a touch of the user input 405 is released in the hinge region 407 adjacent to the second housing 220 and a touch occurs in the hinge region 407 adjacent to the first housing 210 within a designated time (e.g., 0.1 seconds, 0.3 seconds, 0.5 seconds), the processor 120 may process the user input 405 detected before the touch release and after the touch release as a single user input.

According to an embodiment, the processor 120 may adjust the margin region of the hinge region 210A based on the folding angle. The processor 120 may configure the margin region of the hinge region 407 to be large when the folding angle is a first reference angle (e.g., less than 90 degrees). Alternatively, the processor 120 may configure the margin region of the hinge region 407 to be small when the folding angle is a second reference angle (e.g., greater than or equal to 120 degrees). For example, based on a case where the folding angle between the first housing 210 and the second housing 220 is 100 degrees, the hinge region 407 may be a designated region (e.g., 1 cm) from the folding axis A. When the folding angle is the first reference angle, the hinge region 407 may have a margin region (e.g., 0.5 cm) configured to be large. When the folding angle is the second reference angle, the hinge region 407 may have a margin region (e.g., 0.2 cm) that is configured to be small.

A third drawing numeral 450 illustrates an example in which the user input 405 having passed through the hinge region 407 is dragged and dropped to a location on the first display 230 corresponding to the first housing 210. The processor 120 may display the execution screen of the second application at the location to which the user input 405 selecting an icon of the second application is dragged and dropped after passing through the hinge region 407. When a user input that moves the icon of the second application is detected while the execution screen of the first application is displayed in the flex mode, the processor 120 may recognize that the user input is an attempt to execute multiple windows. The processor 120 may adjust the location of the execution screen of the first application to display the execution scree of the second application at a location where the user input is released. For example, the processor 120 may display the execution screen of the second application on the first display 230 corresponding to the first housing 210 and the execution screen of the first application on the first display 230 corresponding to the second housing 220.

According to an embodiment, when a user input for moving the icon of the second application is detected while the execution screen of the first application is displayed in the flex mode, the processor 120 may display a drop target region in response to the user input. The drop target region may indicate a region in which multiple windows can be executed, and may include three or more regions. The processor 120 may display the boundaries of the drop target region, or distinguishably display regions to be displayed as multiple windows in response to the user input.

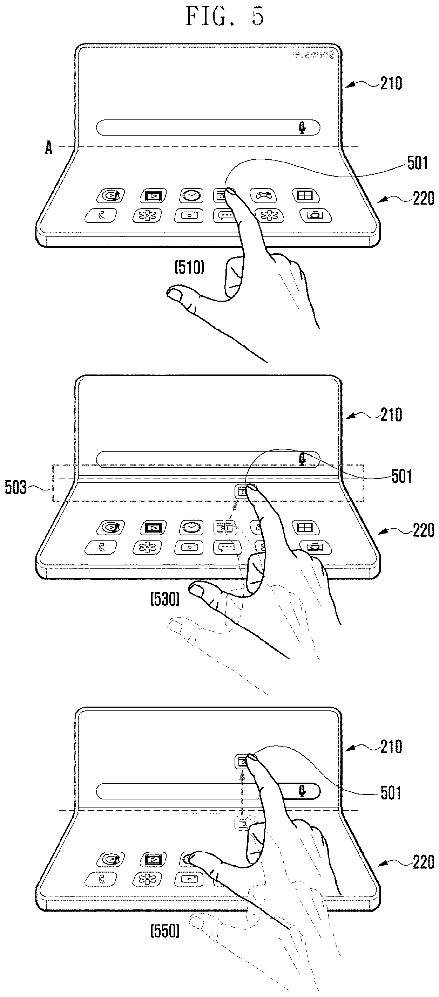

FIG. 5 illustrates an example of moving an icon in a flex mode of a foldable electronic device according to an embodiment.

Referring to FIG. 5, a foldable electronic device (e.g., the electronic device 101 in FIG. 1) according to an embodiment may include a first housing (e.g., the first housing 210 in FIGS. 2A to 2C) including a first surface (e.g., the first surface 211 in FIGS. 2A to 2C) and a third surface (e.g., the third surface 213 in FIGS. 2A to 2C), and a second housing (e.g., the second housing 220 in FIGS. 2A to 2C) including a second surface (e.g., the second surface 221 in FIGS. 2A to 2C) and a fourth surface (e.g., the fourth surface 223 in FIGS. 2A to 2C). The first housing 210 and the second housing 220 may be disposed on both sides of a hinge structure (e.g., the hinge structure 260 in FIG. 2A) and may have overall symmetrical shapes with respect to a folding axis (e.g., A).

The foldable electronic device 101 may have a first display 230 (e.g., a main display) (e.g., the display module 160 in FIG. 1) formed on the first surface 211 of the first housing 210 and the second surface 221 of the second housing 220. The first display 230 may be formed entirely on the front surface 200 of the foldable electronic device 101 (e.g., in a first direction of the electronic device 101). The first display 230 may refer to a flexible display having at least a partial region that can be deformed into a flat or curved surface.

A processor (e.g., the processor 120 in FIG. 1) of the foldable electronic device 101 may display a home screen on the first display 230 in a flex mode. The flex mode may refer to a state of the foldable electronic device 101 in which the first housing 210 and the second housing 220 form a folding angle (e.g., FIG. 2C). For example, in the flex mode, one surface of the second housing 220 may rest on the floor, and the second housing 220 resting on the floor and the first housing 210 not resting on the floor form a predetermined angle.

Referring to a first drawing numeral 510, the processor 120 may detect a user input 501 that selects an icon of at least one application included in the home screen in the flex mode. The home screen may include icons corresponding to multiple applications or at least one widget (or widget information). A user may select an icon of at least one application which the user wishes to move.

A second drawing numeral 530 illustrates an example in which the user input 501, which selects an icon of the at least one application, moves and passes through a hinge region 503 (e.g., the hinge region 210A in FIG. 2C). The hinge region 503 may be a region adjacent to the hinge structure 260. The processor 120 may determine whether the user input 501 having passed through the hinge region 503 moves to the first display 230 corresponding to the first housing 210.

A third drawing numeral 550 illustrates an example in which the user input 501 having passed through the hinge region 503 is dragged and dropped to a location on the first display 230 corresponding to the first housing 210. The processor 120 may move the icon of the at least one application to a location to which the user input 501, which has selected the icon of the at least one application, is dragged and dropped after passing through the hinge region 503. When a user input for moving the icon of the at least one application is detected while the home screen is displayed in the flex mode, the processor 120 may recognize that the user input is intended to move the icon.

According to an embodiment, when the user input 501 passes through the hinge region 503, touch release may temporarily occur. The processor 120 may process the touch release occurring in the hinge region 503 by determining whether the user input 501, which has selected the icon of the at least one application, passes through the hinge region 503 and moves to a location on the first display 230 corresponding to the first housing 210. For example, even when touch release occurs in the hinge region 503, the processor 120 may delay performing a function corresponding to the touch release. When a touch of the user input 501 is released in the hinge region 501 adjacent to the second housing 220 and a touch occurs in the hinge region 503 adjacent to the first housing 210 within a designated time (e.g., 0.1 seconds, 0.3 seconds, or 0.5 seconds), the processor 120 may process the user input 501 as a single user input.

In response to a user input that selects an icon of at least one application on the first display 230 corresponding to the second housing 220 in a flex mode, passes through the hinge region 503, and moves to a location the first display 230 corresponding to the first housing 210, the processor 120 may move the selected icon.

In response to a user input that selects at least one widget on the first display 230 corresponding to the second housing 220 in a flex mode, passes through the hinge region 503, and moves to a location on the first display 230 corresponding to the first housing 210, the processor 120 may move the selected widget. The processor 120 may move the selected widget to a location on the first display 230 corresponding to the first housing 210, where the user input is released.

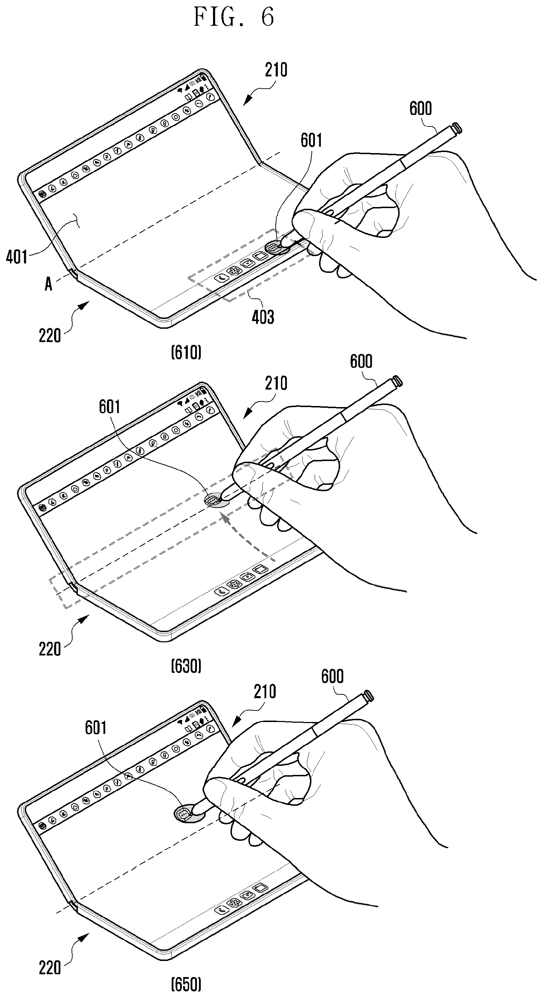

FIG. 6 illustrates an example of executing multiple windows based on a pen touch in a flex mode of a foldable electronic device according to an embodiment.

Referring to FIG. 6, a foldable electronic device (e.g., the electronic device 101 in FIG. 1) according to an embodiment may include a first housing (e.g., the first housing 210 in FIGS. 2A to 2C) including a first surface (e.g., the first surface 211 in FIGS. 2A to 2C) and a third surface (e.g., the third surface 213 in FIGS. 2A to 2C), and a second housing (e.g., the second housing 220 in FIGS. 2A to 2C) including a second surface (e.g., the second surface 221 in FIGS. 2A to 2C) and a fourth surface (e.g., the fourth surface 223 in FIGS. 2A to 2C). The first housing 210 and the second housing 220 may be disposed on both sides of a hinge structure (e.g., the hinge structure 260 in FIG. 2A) and may have overall symmetrical shapes with respect to a folding axis (e.g., A).

The foldable electronic device 101 may have a first display 230 (e.g., a main display) (e.g., the display module 160 in FIG. 1) formed on the first surface 211 of the first housing 210 and the second surface 221 of the second housing 220. The first display 230 may be formed entirely on the front surface 200 of the foldable electronic device 101 (e.g., in a first direction of the electronic device 101). The first display 230 may refer to a flexible display having at least a partial region that can be deformed into a flat or curved surface.

The foldable electronic device 101 may include a digitizer layer capable of detecting a touch input using a pen. For example, the foldable electronic device 101 may include a first digitizer layer corresponding to the first surface 211 of the first housing 210 and a second digitizer layer corresponding to the second surface 221 of the second housing 220.

A processor (e.g., the processor 120 in FIG. 1) of the foldable electronic device 101 may display an execution screen 401 of a first application on the first display 230 in a flex mode. The flex mode may refer to a state of the foldable electronic device 101 in which the first housing 210 and the second housing 220 form a folding angle (e.g., FIG. 2C). For example, in the flex mode, one surface of the second housing 220 may rest on the floor, and the second housing 220 resting on the floor and the first housing 210 not resting on the floor form a predetermined angle.

When at least one application is executed in a flex mode, the processor 120 may display a task bar 403, which includes an icon corresponding to the at least one application, at the bottom of the first display 230. The task bar 403 may be provided to quickly execute another application while the at least one application is executed.

Referring to a first drawing numeral 610, the processor 120 may detect a user input 601 that selects an icon of a second application included in the taskbar 403 while the execution screen 401 of the first application is displayed in a flex mode. In the drawing, the user input 601 may be illustrated as, for example, a touch input using a pen 600.

A second drawing numeral 630 illustrates an example in which the user input 601 selecting the icon of the second application moves and passes through a hinge region 407 (e.g., the hinge region 210A in FIG. 2C). The hinge region 407 may be a region adjacent to the hinge structure 260. The processor 120 may determine whether the user input 601 having passed through the hinge region 407 moves to the first display 230 corresponding to the first housing 210.

According to an embodiment, during the user input 601 passing through the hinge region 407, a user may perform dragging while pressing a button on the pen 600. The processor 120 may determine whether the user input 601, which has selected the icon of the second application, passes through the hinge region 407 and moves to a location on the first display 230 corresponding to the first housing 210, and may process a touch event occurring in the hinge region 407. For example, when the user performs dragging while pressing the button of the pen 600 in the hinge region 407, the processor 120 may convert a touch event into a hover to process the touch event.

A third drawing numeral 650 illustrates an example in which the user input 601 having passed through the hinge region 407 is dragged and dropped to a location on the first display 230 corresponding to the first housing 210. The processor 120 may display an execution screen of the second application at a location to which the user input 601, which has selected the icon of the second application, is dragged and dropped after passing through the hinge region 407. When a user input that moves the icon of the second application is detected while the execution screen of the first application is displayed in the flex mode, the processor 120 may recognize that the user input is an attempt to execute multiple windows. The processor 120 may adjust the location of the execution screen of the first application to display the execution screen of the second application at a location where the user input is released. For example, the processor 120 may display the execution screen of the second application on the first display 230 corresponding to the first housing 210 and the execution screen of the first application on the first display 230 corresponding to the second housing 220.

According to an embodiment, when a user input for moving the icon of the second application is detected while the execution screen of the first application is displayed in the flex mode, the processor 120 may display a drop target region in response to the user input. The drop target region may indicate a region in which multiple windows can be executed, and may include three or more regions.

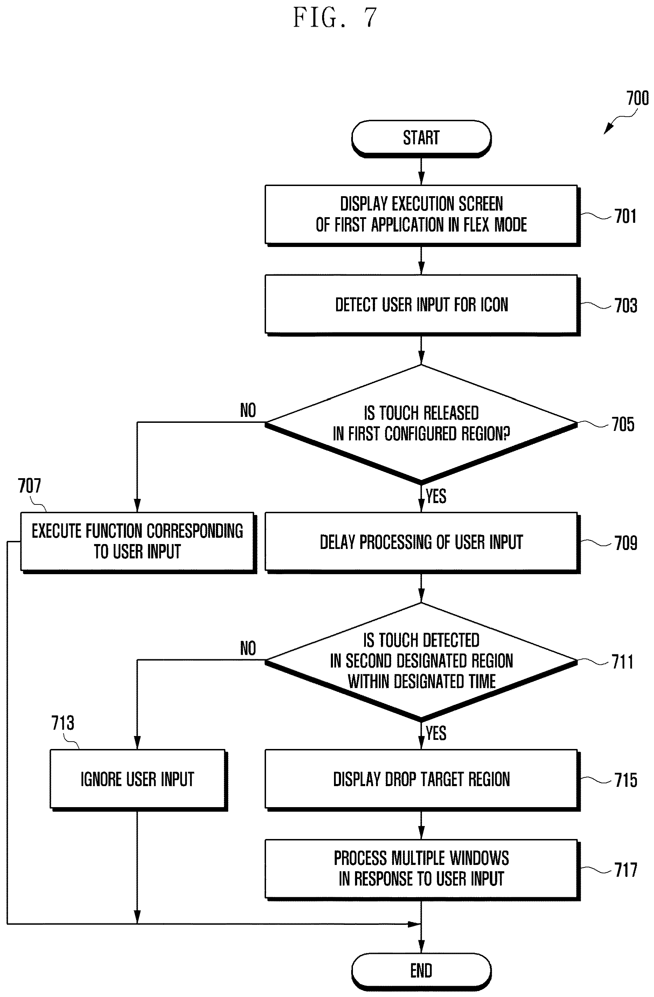

FIG. 7 is a flowchart 700 illustrating a method for executing multiple windows in a flex mode of a foldable electronic device according to an embodiment.

Referring to FIG. 7, in operation 701, a processor (e.g., the processor 120 in FIG. 1) of a foldable electronic device (e.g., the electronic device 101 in FIG. 1) according to an embodiment may display an execution screen of a first application in a flex mode. The foldable electronic device 101 may include a first housing (e.g., the first housing 210 in FIGS. 2A to 2C) including a first surface (e.g., the first surface 211 in FIGS. 2A to 2C) and a third surface (e.g., the third surface 213 in FIGS. 2A to 2C), and a second housing (e.g., the second housing 220 in FIGS. 2A to 2C) including a second surface (e.g., the second surface 221 in FIGS. 2A to 2C) and a fourth surface (e.g., the fourth surface 223 in FIGS. 2A to 2C). The first housing 210 and the second housing 220 may be disposed on both sides of a hinge structure (e.g., the hinge structure 260 in FIG. 2A) and may have overall symmetrical shapes with respect to a folding axis (e.g., A).

The foldable electronic device 101 may have a first display 230 (e.g., a main display) (e.g., the display module 160 in FIG. 1) formed on the first surface 211 of the first housing 210 and the second surface 221 of the second housing 220. The first display 230 may be formed entirely on the front surface 200 of the foldable electronic device 101 (e.g., in a first direction of the electronic device 101). The first display 230 may refer to a flexible display having at least a partial region that can be deformed into a flat or curved surface. The foldable electronic device 101 may have a second display 240 (e.g., a sub-display or a cover display) (e.g., the display module 160 in FIG. 1) on a portion of the rear surface 250 of the foldable electronic device. The second display 240 may be formed on at least a portion of the third surface 213 of the first housing 210.

The processor may display the execution screen of the first application on the first display 230 in the flex mode. The flex mode may refer to a state of the foldable electronic device 101 in which the first housing 210 and the second housing 220 form a folding angle (e.g., FIG. 2C). For example, in the flex mode, one surface of the first housing 210 or the second housing 220 may rest on the floor, and the first housing 210 resting on the floor and the second housing 220 not resting on the floor form a predetermined angle. The direction in which one surface of the first housing 210 or one surface of the second housing 220 rests on the floor may be a transverse direction of the foldable electronic device 101. In the flex mode, the side surfaces of the first housing 210 and the second housing 220 may rest on the floor. The direction in which the side surfaces of the first housing 210 and the second housing 220 rest on the floor may be the longitudinal direction of the foldable electronic device 101.

In operation 703, the processor 120 may detect a user input for an icon. When displaying the execution screen of the first application in the flex mode, the processor 120 may display a task bar including icons corresponding to one or more applications at the bottom of the first display 230. The task bar may be provided to quickly execute another application while at least one application is executed. The processor 120 may detect a user input (e.g., a long press) that selects an icon of at least one application included in the task bar.

In operation 705, the processor 120 may detect whether a touch of the detected user input is released in a first configured region. In the flex mode, touch contact may be difficult in a partial region (e.g., a hinge region (e.g., the hinged region 210A in FIG. 2C)) due to the folding angle between the first housing 210 and the second housing 220. The first configured region may refer to a portion of the hinge region 210A, for example, a portion of the hinge region 210A included in the second housing 220 or a portion of the hinge region 210A included in the first housing 210. When the user input is detected on the first display 230 corresponding to the second housing 220, the first configured region may be a portion of the hinge region 210A included in the second housing 220. Alternatively, when the user input is detected on the first display 230 corresponding to the first housing 210, the first configured region may be a portion of the hinged region 210A included in the first housing 220.

The processor 120 may perform operation 709 when a touch of the detected user input is release in the first configured region, and may perform operation 707 when the touch of the detected user input is not released in the first configured region.

When the touch of the detected user input is not released in the first configured region, the processor 120 may perform a function corresponding to a user input in operation 707. For example, the user input may be for controlling the first application, rather than passing through the hinge region 210A. When the user input is for controlling the first application, the processor 120 may perform a function corresponding to the detected user input.

When the touch of the detected user input is released in the first configured region, the processor 120 may delay user input processing in operation 709. The user input may move between the housings, and may be a user input which starts from one housing, passes through the hinge region 210A, and is dragged and dropped to the other housing. In this case, even though touch release occurs in the hinge region 21A due to the folding angle, the processor 120 may delay processing of the touch release without processing the touch release.

According to an embodiment, even when no direct touch contact is detected in the hinge region 210A and a hover input is detected approximately 5-10 mm away, the processor 120 may amplify and detect the amount of change in capacitance which slightly varies in response to the hover input and process the hover input as a user input. In other words, the processor 120 may event-transition a touch input to a hover input and process the hover input as a single user input. For example, an event hub that processes a user input may transmit a hover event to a driver of a touchscreen panel, and the driver of the touchscreen panel may transmit the hover event to a touch display driver integrated chip. The touch display driver integrated chip may process the hover event.

In operation 711, the processor 120 may determine whether a touch is detected in a second configured region within a designated time (e.g., 0.1 seconds, 0.3 seconds, or 0.5 seconds). After the user input passes through the hinge region 210A, contact by the user's body or a pen may occur again on any one housing. The second configured region may be a portion of the hinge region 210A, for example, a portion of the hinge region 210A included in the second housing 220 or a portion of the hinge region 210A included in the first housing 220. When the first configured region is a portion of the hinge region 210A included in the second housing 220, the second configured region may be a portion of the hinge region 210A included in the first housing 220. Alternatively, when the first configured region is a portion of the hinge region 210A included in the first housing 220, the second configured region may be a portion of the hinge region 210A included in the second housing 220.

The processor 120 may perform operation 715 when a touch is detected in the second configured region within the designated time, and may perform operation 713 when no touch is detected in the second configured region within the designated time.

When no touch is detected in the second configured region within the designated time, the processor 120 may ignore the user input in operation 713. For example, when the user has selected an icon on the first display 230 corresponding to the first housing 210, dragged and dropped the icon to release a touch in the hinge region 210A, and then performed no action, the processor 120 may determine that the user's intent is unclear, and may ignore the user input. Alternatively, the processor 120 may determine that the detected user input is an input to execute an application corresponding to a selected icon at the center of the first display 230, and may display the application corresponding to the selected icon at the center of the first display 230 in a pop-up format. This is merely an implementation issue and does not limit the disclosure.

When a touch is detected in the second configured region within the designated time, the processor 120 may display a drop target region in operation 715. The drop target region indicates a region in which multiple windows can be executed, and may include three or more regions. The processor 120 may display the boundaries of the drop target region, or may distinguishably display regions to be displayed as multiple windows in response to a user input. For example, when the user input is dragged and dropped from the second housing 220 to the first display 230 corresponding to the first housing 210, a drop target region corresponding to the first housing 210 may be displayed. When the user input is dragged and dropped from the first housing 210 to the first display 230 corresponding to the second housing 220, a drop target region corresponding to the second housing 220 may be displayed.

In operation 717, the processor 120 may process multiple windows in response to the user input. As the processing of the multiple windows, the processor 120 may process a split screen view or a pop-up view. The processor 120 may display the execution screen of the first application on the first display 230 corresponding to the first housing 210 and the execution screen of the second application on the first display 230 corresponding to the second housing 220.

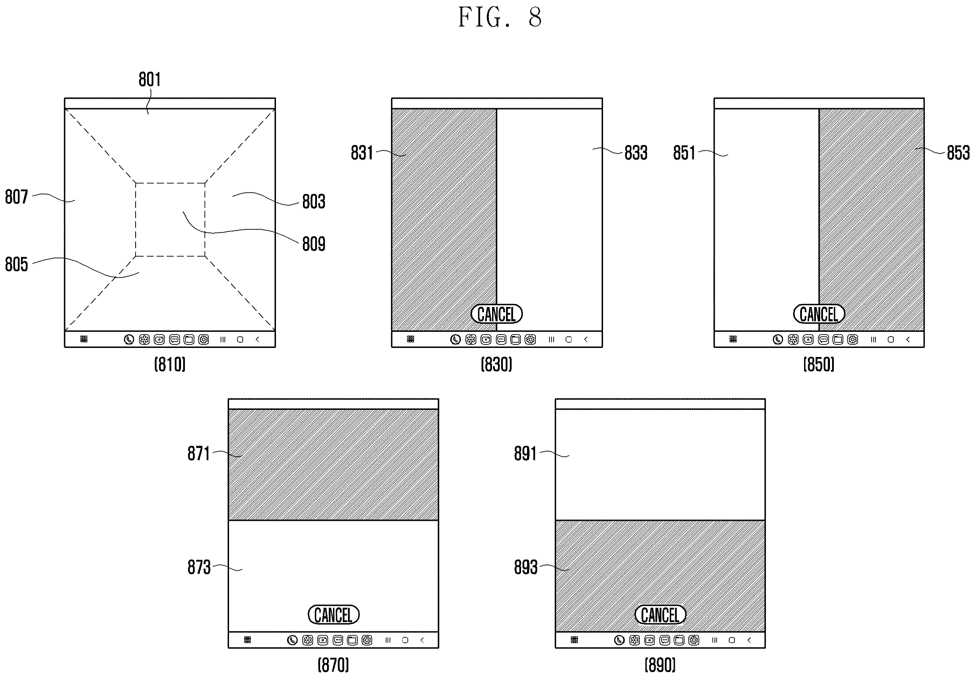

FIG. 8 illustrates an example of a drop target region of a foldable electronic device according to an embodiment.

Referring to FIG. 8, a foldable electronic device (e.g., the electronic device 101 in FIG. 1) according to an embodiment may display a drop target region in response to a user input. The foldable electronic device 101 may include a first housing (e.g., the first housing 210 in FIGS. 2A to 2C) including a first surface (e.g., the first surface 211 in FIGS. 2A to 2C) and a third surface (e.g., the third surface 213 in FIGS. 2A to 2C), and a second housing (e.g., the second housing 220 in FIGS. 2A to 2C) including a second surface (e.g., the second surface 221 in FIGS. 2A to 2C) and a fourth surface (e.g., the fourth surface 223 in FIGS. 2A to 2C). The first housing 210 and the second housing 220 may be disposed on both sides of a hinge structure (e.g., the hinge structure 260 in FIG. 2A) and may have overall symmetrical shapes with respect to a folding axis (e.g., A).

The foldable electronic device 101 may have a first display 230 (e.g., a main display) (e.g., the display module 160 in FIG. 1) formed on the first surface 211 of the first housing 210 and the second surface 221 of the second housing 220. The first display 230 may be formed entirely on the front surface 200 of the foldable electronic device 101 (e.g., in a first direction of the electronic device 101). The first display 230 may refer to a flexible display having at least a partial region that can be deformed into a flat or curved surface.

Referring to a first drawing numeral 810, the foldable electronic device 101 may display the drop target region on the first display 230. The foldable electronic device 101 may display the boundaries of the drop target region, or may distinguishably display regions to be displayed as multiple windows in response to a user input. For example, the drop target region may indicate a region which multiple windows can be executed, and may include three or more regions. For example, the drop target region may include five regions, including a first drop target region 801, a second drop target region 803, a third drop target region 805, a fourth drop target region 807, and a fifth drop target region 809.

Referring to a second drawing numeral 830, when a user input starting from the second housing 220 is dragged and dropped to the first housing 210, the foldable electronic device 101 may display the drop target region 831 on the first display 230 corresponding to the first housing 210 and an execution screen 833 of a first application on the first display 230 corresponding to the second housing 220.

Referring to a third drawing numeral 850, when a user input starting from the first housing 210 is dragged and dropped to the second housing 230, the foldable electronic device 101 may display an execution screen 851 of a first application on the first display 230 corresponding to the first housing 210 and a drop target region 853 on the first display 230 corresponding to the second housing 220.

Referring to a fourth drawing numeral 870, when a user input starting from the second housing 220 is dragged and dropped to the first housing 210, the foldable electronic device 101 may display a drop target region 871 on the first display 230 corresponding to the first housing 210. An execution screen 873 of a first application may be displayed on the first display 230 corresponding to the second housing 220.

Referring to a fifth drawing numeral 890, when a user input starting from the first housing 210 is dragged and dropped to the second housing 220, the foldable electronic device 101 may display a drop target region 893 on the first display 230 corresponding to the second housing 220. An execution screen 891 of a first application may be displayed on the first display 230 corresponding to the first housing 210.

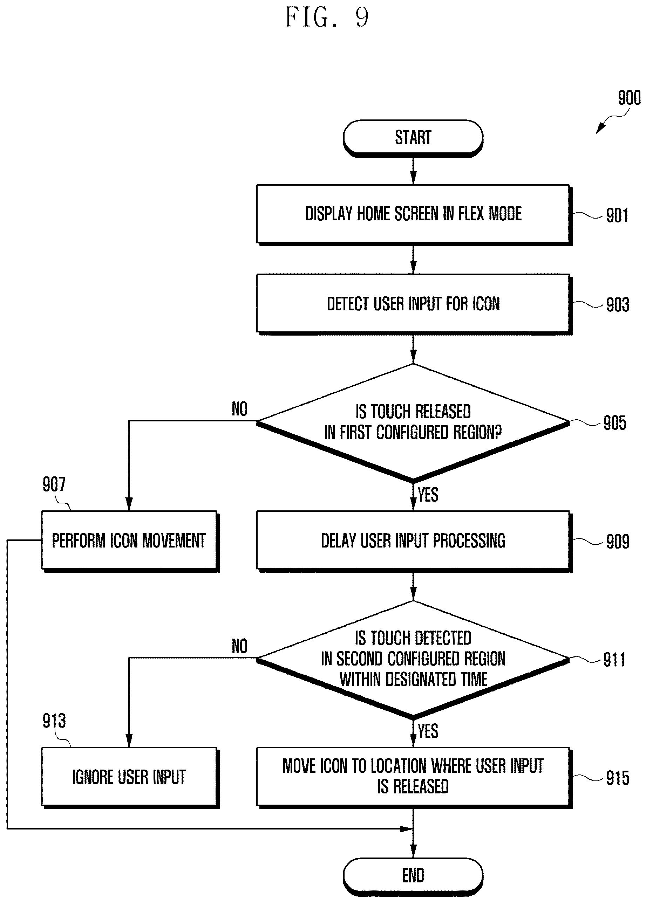

FIG. 9 is a flowchart 900 illustrating a method for moving an icon in a flex mode of a foldable electronic device according to an embodiment.

Referring to FIG. 9, in operation 901, a processor (e.g., the processor 120 in FIG. 1) of a foldable electronic device (e.g., the electronic device 101 in FIG. 1) according to an embodiment may display a home screen in a flex mode. The foldable electronic device may include a first housing (e.g., the first housing 210 in FIGS. 2A to 2C) including a first surface (e.g., the first surface 211 in FIGS. 2A to 2C) and a third surface (e.g., the third surface 213 in FIGS. 2A to 2C), and a second housing (e.g., the second housing 220 in FIGS. 2A to 2C) including a second surface (e.g., the second surface 221 in FIGS. 2A to 2C) and a fourth surface (e.g., the fourth surface 223 in FIGS. 2A to 2C). The first housing 210 and the second housing 220 may be disposed on both sides of a hinge structure (e.g., the hinge structure 260 in FIG. 2A) and may have overall symmetrical shapes with respect to a folding axis (e.g., A).

The foldable electronic device 101 may have a first display 230 (e.g., a main display) (e.g., the display module 160 in FIG. 1) formed on the first surface 211 of the first housing 210 and the second surface 221 of the second housing 220. The first display 230 may be formed entirely on the front surface 200 of the foldable electronic device 101 (e.g., in a first direction of the electronic device 101). The first display 230 may refer to a flexible display having at least a partial region that can be deformed into a flat or curved surface. The foldable electronic device 101 may have a second display 240 (e.g., a sub-display or a cover display) (e.g., the display module 160 in FIG. 1) on a portion of the rear surface 250 of the foldable electronic device. The second display 240 may be formed on at least a portion of the third surface 213 of the first housing 210.

The processor may display a home screen on the first display 230 in the flex mode. The flex mode may refer to a state of the foldable electronic device 101 in which the first housing 210 and the second housing 220 form a folding angle (e.g., FIG. 2C). For example, in the flex mode, one surface of the first housing 210 or the second housing 220 may rest on the floor, and the first housing 210 resting on the floor and the second housing 220 not resting on the floor form a predetermined angle. The direction in which one surface of the first housing 210 or one surface of the second housing 220 rests on the floor may be a transverse direction of the foldable electronic device 101. In the flex mode, the side surfaces of the first housing 210 and the second housing 220 may rest on the floor. The direction in which the side surfaces of the first housing 210 and the second housing 220 rest on the floor may be the longitudinal direction of the foldable electronic device 101.

In operation 903, the processor 120 may detect a user input for an icon. The home screen may include icons of multiple applications or at least one widget (or widget information). The processor 120 may detect a user input (e.g., a long press) that selects an icon of at least one application included in the home screen.

In operation 905, the processor 120 may detect whether a touch of the detected user input is released in a first configured region. In the flex mode, touch contact may be difficult in a partial region (e.g., a hinge region (e.g., the hinged region 210A in FIG. 2C)) due to the folding angle between the first housing 210 and the second housing 220. The first configured region may refer to a portion of the hinge region 210A, for example, a portion of the hinge region 210A included in the second housing 220 or a portion of the hinge region 210A included in the first housing 220. When the user input is detected on the first display 230 corresponding to the second housing 220, the first configured region may be a portion of the hinge region 210A included in the second housing 220. Alternatively, when the user input is detected on the first display 230 corresponding to the first housing 210, the first configured region may be a portion of the hinged region 210A included in the first housing 220.

The processor 120 may perform operation 909 when the touch of the detected user input is released in the first configured region, and may perform operation 907 when the touch of the detected user input is not released in the first configured region.

When the touch of the detected user input is not released in the first configured region, the processor 120 may move an icon in operation 907. For example, the user input may be icon movement within the housing where the user input is detected, rather than passing through the hinge region 210A. The processor 120 may move the icon to a location where the user input is released.

When the touch of the detected user input is released in the first configured region, the processor 120 may delay user input processing in operation 909. The user input may move between the housings, and may be a user input which starts from one housing, passes through the hinge region 210A, and is dragged and dropped to the other housing. In this case, even though touch release occurs in the hinge region 21A due to the folding angle, the processor 120 may delay processing of the touch release without processing the touch release.

According to an embodiment, even when no direct touch contact is detected in the hinge region 210A and a hover input is detected approximately 5-10 mm away, the processor 120 may amplify and detect the amount of change in capacitance which slightly varies in response to the hover input, and may process the hover input as a user input. In other words, the processor 120 may event-transition a touch input to a hover input and process the hover input as a single user input. For example, an event hub that processes a user input may transmit a hover event to a driver of a touchscreen panel, and the driver of the touchscreen panel may transmit the hover event to a touch display driver integrated chip. The touch display driver integrated chip may process the hover event.

In operation 911, the processor 120 may determine whether a touch is detected in a second configured region within a designated time (e.g., 0.1 seconds, 0.3 seconds, or 0.5 seconds). After the user input passes through the hinge region 210A, contact by the user's body or a pen may occur again on any one housing. The second configured region may be a portion of the hinge region 210A, for example, a portion of the hinge region 210A included in the second housing 220 or a portion of the hinge region 210A included in the first housing 220. When the first configured region is a portion of the hinge region 210A included in the second housing 220, the second configured region may be a portion of the hinge region 210A included in the first housing 220. Alternatively, when the first configured region is a portion of the hinge region 210A included in the first housing 220, the second configured region may be a portion of the hinge region 210A included in the second housing 220.

The processor 120 may perform operation 915 when a touch is detected in the second configured region within the designated time, and may perform operation 913 when no touch is detected in the second configured region within the designated time.

When no touch is detected in the second configured region within the designated time, the processor 120 may ignore the user input in operation 913. For example, when the user has selected an icon on the first display 230 corresponding to the first housing 210, dragged and dropped the icon to release a touch in the hinge region 210A, and then performed no action, the processor 120 may determine that the user's intent is unclear, and may ignore the user input. Ignoring the user input may imply that the processor 120 does not perform an operation (or a function) corresponding to the user input.

When a touch is detected in the second configured region within the designated time, the processor 120 may move, in operation 915, the icon to a location where the user input has been released. When a user input starts from the first display 230 corresponding to the second housing 220 in operation 903 and the user input is released on the first display 230 corresponding to the first housing 210 in operation 915, the processor 120 may move the icon to a location on the first display 230 where the user input is released.

According to an embodiment of the disclosure, a method for operating a foldable electronic device 101 including a first housing 210 and a second housing 220 disposed on both sides of a hinge structure 260 and configured to be folded with respect to each other may include: detecting a folding angle between the first housing and the second housing by using at least one sensor module 176 included in the foldable electronic device 101; displaying a user interface on the first display 230 based on the folding angle; determining whether a user input passing through the hinge structure 260 is detected on the first display while the user interface is displayed at the folding angle; and performing a function corresponding to the user input.

The determining of whether the user input is detected may include detecting a user input for selecting an icon of a second application included in a task bar displayed on the first display 230 corresponding to the first housing 210 while an execution screen of a first application is displayed on the first display 230 in a flex mode in which the first housing 210 and the second housing 220 form a folding angle.

The performing of the function may include, in case that the detected user input is dragged and dropped onto the first display 230 corresponding to the second housing 220 after passing through the hinge structure 260, displaying a drop target region in response to a touch trajectory of the user input before execution of the multiple windows, and displaying an execution screen of the first application on the first display 230 corresponding to the first housing 210 and an execution screen of the second application on the first display 230 corresponding to the second housing 220.

The method may further include: detecting a user input for selecting an icon of at least one application displayed on the first display 230 while a home screen is displayed on the first display 230 in a flex mode in which the first housing 210 and the second housing 220 form a folding angle; and moving the icon of the at least one application for which the user input has been detected, when the detected user input is dragged and dropped onto the first display 230 corresponding to the second housing 220 after passing through the hinge structure 260.

The method may further include, while a home screen is displayed on the first display 230 in a flex mode in which the first housing 210 and the second housing 220 form a folding angle, detecting a user input for selecting at least one widget displayed on the first display 230 corresponding to the first housing 210, and moving the at least one widget, for which the user input has been detected, when the detected user input is dragged and dropped onto the first display 230 corresponding to the second housing 220 after passing through the hinge structure 260.

The performing of the function may include, while an execution screen of a first application and an execution screen of a second application are displayed on the first display 230 in a flex mode in which the first housing 210 and the second housing 220 form a folding angle, moving data for which a user input is detected to the execution screen of the first application when the user input starts from at least one piece of data included in the execution screen of the second application.

The method may further include adjusting a margin region of a hinge region 210A based on the folding angle between the first housing 210 and the second housing 220.

Various embodiments disclosed in the specification and the drawings are only particular examples for ease of description of the technical matters of the disclosure and understanding of the disclosure, and do not limit the scope of the disclosure. Therefore, it should be construed that all modifications or modified forms capable of being derived from the technical idea of the disclosure in addition to the embodiments disclosed herein are included in the scope of the disclosure.

## Claims

1. A foldable electronic device (101) comprising:
a hinge structure (260);
a first housing (210) and a second housing (220) disposed on both sides of the hinge structure and configured to be folded with respect to each other;
a first display (230) disposed to face a first direction of the first housing and the second housing;
at least one sensor module (176);
a memory (130); and
a processor (120) operatively connected to the first display, the at least one sensor module, or the memory,
wherein the processor is configured to:
detect a folding angle between the first housing and the second housing by using the at least one sensor module (176);
display a user interface on the first display (230) based on the folding angle;
determine whether a user input passing through the hinge structure (260) is detected on the first display while the user interface is displayed at the folding angle; and
perform a function corresponding to the user input.

2. The foldable electronic device of claim 1, wherein the processor is configured to, while an execution screen of a first application is displayed on the first display (230) in a flex mode in which the first housing (210) and the second housing (220) form a folding angle, detect a user input for selecting an icon of a second application included in a task bar displayed on the first display (230) corresponding to the first housing (210).

3. The foldable electronic device of claim 2, wherein the processor is configured to execute multiple windows in case that the detected user input is dragged and dropped onto the first display (230) corresponding to the second housing (220) after passing through the hinge structure (260).

4. The foldable electronic device of claim 3, wherein the processor is configured to display a drop target region in response to a touch trajectory of the user input before the execution of the multiple windows.

5. The foldable electronic device of claim 3, wherein the processor is configured to:
display the execution screen of the first application on the first display (230) corresponding to the first housing (210); and
display an execution screen of the second application on the first display (230) corresponding to the second housing (220).

6. The foldable electronic device of claim 1, wherein the processor is configured to, while a home screen is displayed on the first display (230) in a flex mode in which the first housing (210) and the second housing (220) form a folding angle, detect a user input for selecting an icon of at least one application displayed on the first display (230) corresponding to the first housing (210).

7. The foldable electronic device of claim 6, wherein the processor is configured to move the icon of the at least one application, for which the user input has been detected, in case that the detected user input is dragged and dropped onto the first display (230) corresponding to the second housing (220) after passing through the hinge structure (260).

8. The foldable electronic device of claim 1, wherein the processor is configured to:
while a home screen is displayed on the first display (230) in a flex mode in which the first housing (210) and the second housing (220) form a folding angle,
detect a user input for selecting at least one widget displayed on the first display (230) corresponding to the first housing (210); and
move the at least one widget, for which the user input has been detected, in case that the detected user input is dragged and dropped onto the first display (230) corresponding to the second housing (220) after passing through the hinge structure (260).

9. The foldable electronic device of claim 1, wherein the processor is configured to, while an execution screen of a first application and an execution screen of a second application are displayed on the first display (230) in a flex mode in which the first housing (210) and the second housing (220) form a folding angle, move data for which a user input is detected to the execution screen of the first application in case that the user input starts from at least one piece of data included in the execution screen of the second application.

10. The foldable electronic device of claim 1, wherein the processor is configured to change a touch event to a hover event in case that touch release occurs while the user input passes through the hinge structure (260).

11. The foldable electronic device of claim 1, wherein the processor is configured to delay performing a function corresponding to touch release in case that the touch release occurs while the user input passes through the hinge structure (260).

12. The foldable electronic device of claim 11, wherein the processor is configured to process the user input detected before and after the touch release as a single user input, in case that a touch occurs on the first display corresponding to another housing adjacent to the hinge structure within a designated time after the touch release.

13. The foldable electronic device of claim 1, wherein the processor is configured to adjust a margin region of a hinge region (210A), based on the folding angle between the first housing (210) and the second housing (220).

14. A method for operating a foldable electronic device (101) including a first housing (210) and a second housing (220) disposed on both sides of a hinge structure (260) and configured to be folded with respect to each other, the method comprising:
detecting a folding angle between the first housing and the second housing by using at least one sensor module (176) included in the foldable electronic device (101);
displaying a user interface on a first display (230) based on the folding angle;
determining whether a user input passing through the hinge structure (260) is detected on the first display while the user interface is displayed at the folding angle; and
performing a function corresponding to the user input.

15. The method of claim 14, wherein the determining of whether the user input is detected comprises detecting a user input for selecting an icon of a second application included in a task bar displayed on the first display (230) corresponding to the first housing (210) while an execution screen of a first application is displayed on the first display (230) in a flex mode in which the first housing (210) and the second housing (220) form a folding angle.
